# EUROPÄISCHE PATENTSCHRIFT

(11) **EP 0 433 411 B1**
(45) Veröffentlichungstag und Bekanntmachung des Hinweises auf die Patenterteilung: **31.08.1994**
(21) Anmeldenummer: 90908929.4
(22) Anmeldetag: 08.06.1990
(51) Int. Cl.: G01F 1/68, G01F 5/00

(54) **LUFTMESSVORRICHTUNG**
AIR-FLOW METER
DISPOSITIF POUR LA MESURE DE L'AIR

(30) Priorität: 08.07.1989 DE 3922489
(43) Veröffentlichungstag der Anmeldung: 26.06.1991
(73) Patentinhaber: ROBERT BOSCH GMBH, 70442 Stuttgart (DE)
(72) Erfinder: PETERS, Klaus-Jürgen, D-7151 Affalterbach-Birkhau (DE); BOSCH, Walter, D-7050 Waiblingen (DE); STIEFEL, Hans-Peter, D-7257 Ditzingen (DE); GMELIN, Karl, D-7101 Flein (DE); FRANK, Kurt, D-7060 Schorndorf-Haubersbronn (DE); SCHWEGEL, Thomas, D-7257 Ditzingen-Heimerdingen (DE)
(86) Internationale Anmeldenummer: DE9000439
(87) Internationale Veröffentlichungsnummer: WO9100987

(56) Entgegenhaltungen:
- EP-A- 0 085 987
- EP-A- 0 218 216
- EP-A- 0 232 710
- CH-A- 0 268 202
- GB-A- 2 065 898

## Beschreibung

### Stand der Technik

Die Erfindung geht aus von einer Luftmeßvorrichtung der im Oberbegriff des Anspruchs 1 definierten Gattung.

Solche Luftmeßvorrichtungen sind beispielsweise aus der DE 32 00 507 A1, US-PS 4 494 405, DE 29 14 275 C2, EP 0 087 621 B1 oder EP 0 054 887 B1 bekannt. Der dabei verwendete temperaturabhängige Meßwiderstand, beispielsweise Hitzdraht oder Heißfilm, ändert seinen elektrischen Widerstand in Abhängigkeit von der Änderung der Luftströmung im Bypaßkanal. Das Ausgangssignal des Meßwiderstands ist damit ein Maß für den Luftdurchsatz im Hauptströmungskanal. Bei solchen Luftmeßvorrichtungen sind die an dem Meßwiderstand abgenommenen Signale teilweise stark verrauscht, so daß eine aufwendige Signalverarbeitungselektronik erforderlich ist, um genügend genaue Meßwerte zu gewinnen.

Weiterhin ist durch die EP-A-0232710 eine Luftmeßvorrichtung bekannt, die einen Bypaßkanal mit einem sich verjüngenden Einlaßabschnitt und einem das Meßelement aufnehmenden Mittelabschnitt hat, der mit einer sprunghaften Erweiterung in einen Ringkanal übergeht. Die CH-A-268202 zeigt eine Durchflußmeßeinrichtung, die einen Bypaßkanal aufweist, um dessen Wandung sowie um die Wandung des Hauptkanals je eine Widerstandswicklung gelegt ist und der unter einem Winkel in den Hauptkanal mündet. Die EP-A-0218216 zeigt einen in einen Venturikanal mündenden Bypaßkanal, der einen Einlaßabschnitt, einen das Meßelement aufnehmenden Mittelabschnitt und einen sprunghaft sich zu einem Ringkanal erweiternden Auslaßabschnitt. Durch die GB-A-2065898 ist eine Luftmeßvorrichtung bekannt, bei der ein Bypaßkanal in einer Venturisektion mündet, der von einem einen Einlaßabschnitt bildenden Ringkanal sprunghaft in einen Mittelabschnitt mit dem Meßelement übergeht, an den sich ein sprunghaft erweiternder, ringkanalförmiger Auslaßabschnitt anschließt. Diese Meßvorrichtungen haben den Nachteil, daß die abgenommenen Signale stark verrauscht sind und durch eine aufwendige Signalverarbeitungselektronik erst in genügend genaue Weßwerte überführt werden müssen.

### Vorteile der Erfindung

Die erfindungsgemäße Luftmeßvorrichtung mit den Merkmalen des Anspruchs 1 hat demgegenüber den Vorteil, daß die dem eigentlichen Meßwertsignal überlagerte Rauschkomponente wesentlich reduziert und das Meßwertsignal weitgehend unbeeinflußt von konstruktiven Gegebenheiten in der Luftmeßvorrichtung ist.

Bei einer Luftmeßvorrichtung mit den Merkmalen des Anspruchs 1 wird insbesondere eine Funktionskennlinie oder ein Kennlinienverlauf mit genügend hoher Auflösung erhalten.

Bei einer Luftmeßvorrichtung mit den Merkmalen des Anspruchs 4 wird insbesondere der Einfluß der unterschiedlichen Öffnungswinkel der Drosselklappe auf das Meßwertsignal eliminiert.

Eine Kombination der Merkmale der Ansprüche 1,3 und 4 läßt den angestrebten Erfolg deutlich verstärkt eintreten.

### Zeichnung

Die Erfindung ist anhand von in der Zeichnung dargestellten Ausführungsbeispielen in der nachfolgenden Beschreibung näher erläutert. Es zeigen:
- Fig. 1: einen Längsschnitt einer Luftmeßvorrichtung für ein Ansaugsystem einer Brennkraftmaschine gemäß eines Ausführungsbeispieles,
- Fig. 2 und 3: eine nicht beanspruchte Ausgestaltung einer Luftmeßvorrichtung.

### Beschreibung der Ausführungsbeispiele

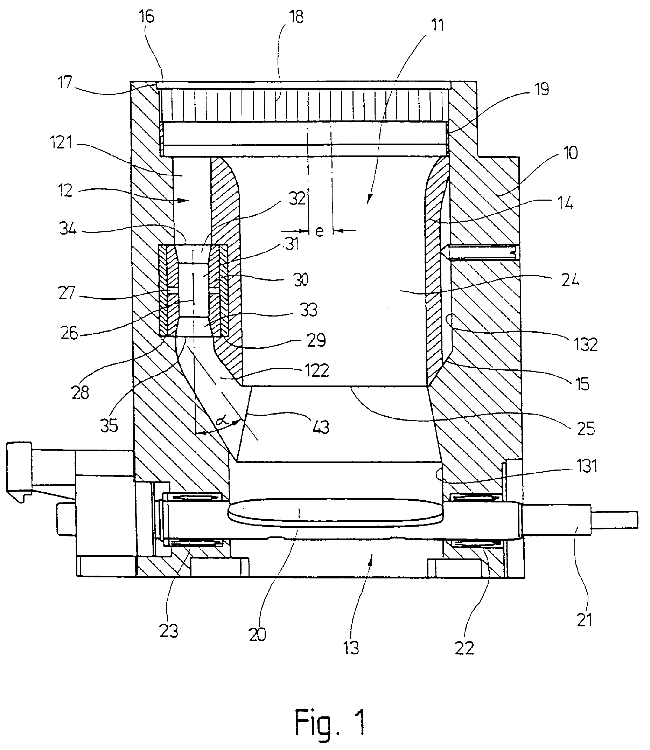

In der in Fig. 1 im Längsschnitt zu sehenden Luftmeßvorrichtung ist mit 10 ein sog. Drosselklappenstutzen bezeichnet, in dem ein Hauptströmungskanal 11 und ein Bypaßkanal 12 ausgebildet ist. Der Drosselklappenstutzen 10 bildet entweder einen Teil des Luftansaugrohrs einer Brennkraftmaschine oder ist mit diesem eingangsseitig verbunden. Ausgangsseitig ist der Drosselklappenstutzen 10 an einem Sammelsaugrohr der Brennkraftmaschine befestigt.

Zur Ausbildung von Hauptströmungskanal 11 und Bypaßkanal 12 ist im Drosselklappenstutzen 10 eine Durchgangsbohrung 13 eingebracht, die sich aus zwei in Achsrichtung hintereinanderliegenden Bohrungen 131 und 132 zusammensetzt. Die Bohrung 132 hat einen größeren Durchmesser als die Bohrung 131 und ist exzentrisch zu dieser in den Drosselklappenstutzen 10 eingebracht, so daß die Achsen der beiden Bohrungen 131,132 um die Exzentrität e parallel zueinander verlaufen. In der Bohrung 132 ist eine Strömungshülse 14 koaxial zur Bohrung 131 eingesetzt, die sich stirnseitig an einer Anschlagfläche 15 im Übergang zwischen den Bohrungen 131,132 abstützt und in Axialrichtung durch einen Sicherungsring 16 gehalten ist, der in einer Sicherungsnut 17 im Eingangsbereich des Drosselklappenstutzens 10 einliegt. Zwischen Sicherungsnut 17 und Strömungshülse 14 ist noch ein Filter oder ein Strömungsgleichrichter 18 und ein Distanzring 19 eingespannt. Die Bohrung 131 und die damit koaxial eingesetzte Strömungshülse 14, die im Durchmesser kleiner ist als der lichte Durchmesser der Bohrung 132, bilden zusammen den Hauptströmungskanal 11, während der Außenmantel der Strömungshülse 14 zusammen mit der Bohrungswand der Bohrung 132 den Bypaßkanal 12 begrenzt. In dem Hauptströmungskanal 11 ist im zylindrischen Bereich der Bohrung 131 eine Drosselklappe 20 angeordnet, die auf einer Stellwelle 21 befestigt ist. Die Stellwelle 21 ist in Lagerstellen 22,23 im Drosselklappenstutzen 10 schwenkbar gelagert. Die Innenwand der Strömungshülse 14 ist venturiförmig ausgebildet und bildet eine venturiförmige Strömungssektion im Hauptströmungskanal 11, im folgenden Venturisektion 24 genannt. Diese Venturisektion 24 hat einen kleinsten Strömungsquerschnitt 25 an dem der Bohrung 131 zugekehrten Ende und erweitert sich zu der Eingangsseite des Drosselklappenstutzens 10 hin.

Im Bypaßkanal 12 ist ein temperaturabhängiger Meßwiderstand 26 angeordnet, der als Hitzdraht oder Heißfilm ausgebildet sein kann. Der Meßwiderstand 26 befindet sich innerhalb eines Trägerkörpers 27, der zwischen der Strömungshülse 14 und dem Drosselklappenstutzen 10 eingespannt ist und jeweils in Ausnehmungen 28,29 in diesen einliegt. Im Trägerkörper 27 ist ein Einsatz 30 eingesetzt, der einen Mittelabschnitt 31, einen sich daran stromaufwärts anschließenden Einlaßabschnitt 32 und einen stromabwärts sich anschließenden Auslaßabschnitt 33 aufweist. Einlaß- und Auslaßabschnitt 32,33 erweitern sich mit zunehmendem Abstand vom Mittelabschnitt 31 kegelstumpfförmig und enden in einer Einlaßöffnung 34 bzw. Auslaßöffnung 35, die kongruent mit dem Kanalquerschnitt des Bypaßkanals 12 sind. Der Meßwiderstand 26 ist mittig im Mittelabschnitt 31 angeordnet. Der stromaufwärts des Trägerkörpers 27 liegende Kanalabschnitt 121 des Bypaßkanals 12 läuft parallel zum Hauptströmungskanal 11 und mündet ebenso wie dieser am Eingang der Strömungshülse 14. Der stromabwärts des Trägerkörpers 27 befindliche Kanalabschnitt 122 des Bypaßkanals 12 verläuft in einem spitzen Winkel α zum Kanalabschnitt 121 und damit zum Hauptströmungskanal 11, so daß die Luftströmungsrichtung an der Mündung 43 des Bypaßkanals 12 im Hauptströmungskanal 11 einen spitzen Winkel α mit der Strömungsrichtung im Hauptströmungskanal 11 einschließt. Durch diesen schrägen Austrittswinkel α kann die Rauschkomponente in dem vom Meßwiderstand abgenommenen Meßsignal deutlich reduziert werden. Dies zeigt sich insbesondere bei einem Vergleich mit einer bekannten Luftmeßvorrichtung, bei welcher der Kanalabschnitt 122 rechtwinklig zum Hauptströmungskanal 11 in letzterem mündet. Als vorteilhaft hat sich ein Neigungswinkel α von ca. 30° erwiesen.

Zur weiteren Reduzierung des Rauschanteils im Meßsignal des Meßwiderstands 26 und zur Erzielung eines Kennlinienverlaufs der Luftmeßvorrichtung mit ausreichender Auflösung sind die Querschnitte von Mittelabschnitt 31, Einlaßöffnung 34 und Auslaßöffnung 35 des Einsatzes 30 im Trägerkörper 27 wie folgt bemessen:
- das Verhältnis von Strömungsguerschnitt des Mittelabschnitts 31 zu dem Minimumquerschnitt 25 der Venturisektion 24 beträgt 1:8 bis 1:25,
- das Verhältnis des Strömungsquerschnitts des Mittelabschnitts 31 zum Querschnitt der Einlaßöffnung 34 beträgt 1:>1 bis 1:2 bei einem Kegelwinkel des Einlaßabschnitts 32 von >0° bis 8°,
- das Verhältnis des Strömungsquerschnitts des Mittelabschnitts 31 zum Querschnitt der Auslaßöffnung 35 beträgt 1:>1 bis 1:2 bei einem Kegelwinkel des Auslaßabschnitts 33 von >0° bis 30°.

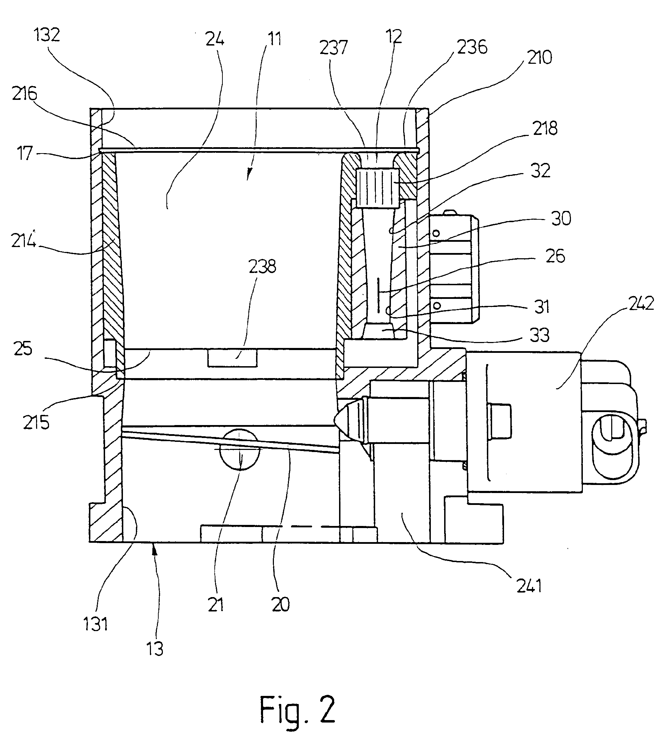

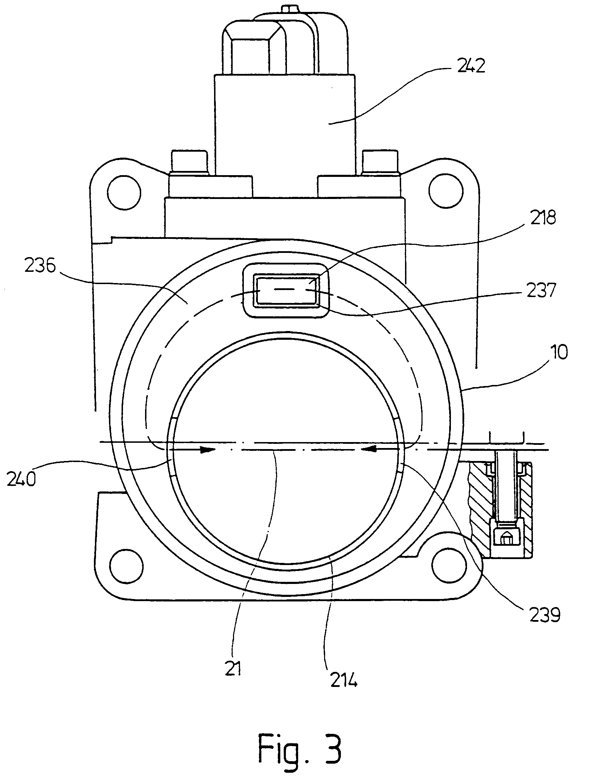

Die in Fig. 2 und 3 dargestellte Luftmeßvorrichtung ist gegenüber der zuvor beschriebenen leicht modifiziert. Gleiche Bauteile sind daher mit gleichen Bezugszeichen und soweit sie modifiziert sind mit einer um 200 erhöhten Bezugszahl versehen.

Die wiederum in die Durchgangsbohrung 13 mit den zueinander exzentrischen Bohrungen 131 und 132 unterschiedlichen Durchmessers eingesetzte Strömungshülse 214 weist eingangsseitig einen Kragen 236 auf, in dem eine Eintrittsöffnung 237 für den Bypaßkanal 12 eingebracht ist. Die Strömungshülse 214 stützt sich mit dem Kragen 236 an der Bohrungswand der Bohrung 132 und axial wiederum an einer Anschlagfläche 215 zwischen den beiden Bohrungen 131,132 ab und ist wiederum in Axialrichtung mittels des Sicherungsrings 16 gehalten. Die Strömungshülse 214 mit Kragen 236 und die Bohrungswand der Bohrung 132 begrenzen wiederum den Bypaßkanal 12, der über eine Austrittsöffnung 238, deren Achse rechtwinklig zur Achse des Drosselklappenstutzens 210 verläuft, im kleinsten Strömungsquerschnitt 25 der von der Strömmungshülse 214 gebildeten Venturisektion 24 oder unterhalb davon mit dem Hauptströmungskanal 11 in Verbindung steht. Im Bypaßkanal 12 ist der Einsatz 30 unmittelbar eingesetzt und zwar so, daß seine Achse mit der der Eintrittsöffnung 237 fluchtet und seine eine Stirnseite unmittelbar an der Unterseite des Kragens 236 anliegt. Im Einsatz 30, der wiederum einen zylindrischen Mittelabschnitt 31 und einen Einlaß- und Auslaßabschnitt 32,33, jeweils kegelstumpfförmig ausgebildet, aufweist, ist im Mittelabschnitt 31 der Meßwiderstand 26 eingesetzt. Der Strömungsgleichrichter 218 ist ausschließlich auf den Bypaßkanal 12 begrenzt und in die Eintrittsöffnung 237 im Kragen 236 eingesetzt.

Um den Einfluß der verschiedenen Öffnungswinkel der Drosselklappe 20 auf das Meßwertsignal auszuschließen, ist die Austrittsöffnung 38 des Bypaßkanals 12 zum Hauptströmungskanal 11 in Richtung der Hauptströmungskanalachse gesehen exakt über der Schwenkachse 21 der Drosselklappe 20 und mit Abstand von dieser angeordnet. Der axiale Abstand der Bypassmündung 238 zur Schwenkachse 21 der Drosselklappe 20 ist größer als das 0,3-fache des Drosselklappendurchmessers.

Wie in Fig. 3 angedeutet ist, kann der Bypaßkanal 12 auch mit zwei Austritsöffnungen 239,240 versehen sein. In diesem Fall liegen beide Austrittsöffnungen 239,240 diametral einander gegenüber und jede Austrittsöffnung 239,240 liegt in Strömungsrichtung im Hauptströmungskanal 11 gesehen exakt über der Stellwelle 21 der Drosselklappe 20, also in einem Bereich, der immer einen konstanten Abstand zur Drosselklappe 20, unabhängig von ihrer jeweiligen Winkelstellung hat. Der Querschnitt jeder Austrittsöffnung 239,240 beträgt dann das 0,15-fache des Drosselklappendurchmessers.

Bei Brennkraftmaschinen mit adaptiver Leerlaufregelung erfolgt die Leerlaufregelung über einen Bypaß 241 (Fig. 2), der um die Drosselklappe 20 herumführt und von einem Magnetventil 242 gesteuert ist. Der Austritt des Bypasses 241, der damit in einer anderen Ebene liegt wie die Austrittsöffnung 238 des Bypaßkanals 12 ist in Umfangsrichtung relativ zu der Austrittsöffnung 238 versetzt angeordnet.

## Patentansprüche

1. Luftmeßvorrichtung, insbesondere zur Messung der von einer Brennkraftmaschine angesaugten Luftmasse, mit einem eine venturiförmige Strömungssektion (Venturisektion) (24) aufweisenden Hauptströmungskanal (11), mit einem Bypasskanal (12), der in den Hauptströmungskanal (11) in Strömungsrichtung oberhalb, im kleinsten Strömungsquerschnitt (Minimumquerschnitt) (25) der Venturisektion (24) oder unterhalb davon mündet, und mit einem im Eypasskanal (12) angeordneten temperaturabhängigen Meßwiderstand (26), wobei im Bypasskanal (12) ein von einer Einlaßöffnung (34) und einer Auslaßöffnung (35) begrenzter Kanalbereich (30) mit einem den Meßwiderstand (26) aufnehmenden Mittelabschnitt (31) und einem daran stromaufwärts sich anschließenden und an der Einlaßöffnung (34) endenden Einlaßabschnitt (32) und einem an den Mittelabschnitt (31) stromabwärts sich anschließenden und an der Auslaßöffnung (35) endenden Auslaßabschnitt (33) ausgebildet ist sowie die Einlaßöffnung (34) und die Auslaßöffnung (35) kongruent mit dem Kanalquerschnitt des angrenzenden Kanalabschnitts (121, 122) des Bypasskanals (12) sind, dadurch gekennzeichnet, daß der Kanalbereich (30) derart ausgebildet ist, daß der Strömungsquerschnitt des Mittelabschnitts (31) zu dem Minimumquerschnitt (25) der Venturisektion (24) in einem Verhältnis von 1:8 bis 1:25 und zum Querschnitt der Einlaßöffnung (34) und der Auslaßöffnung (35) jeweils in einem Verhältnis von 1:>1 bis 1:2 steht.

2. Luftmeßvorrichtung nach Anspruch 1, dadurch gekennzeichnet, daß Ein- und Auslaßabschnitt (32, 33) des Kanalbereichs (30) kegelstumpfförmig ausgebildet sind und daß mit wachsendem Verhältnis des Strömungsquerschnitts des Mittelabschnitts (31) zum Querschnitt von Einlaßöffnung (34) bzw. Auslaßöffnung (35) der Kegelwinkel des Einlaßabschnitts (32) bis etwa 8° und der des Auslaßabschnitts (35) bis etwa 30° ansteigt.

3. Luftmeßvorrichtung nach Anspruch 1 oder 2, dadurch gekennzeichnet, daß der Bypasskanal (12) im Bereich seiner im Minimumquerschnitt (25) der Venturisektion (24) oder unterhalb davon liegenden Mündung derart ausgebildet ist, daß die Luftströmungsrichtung an der Bypassmündung einen spitzen Winkel (α), vorzugsweise ca. 30°, zur Strömungsrichtung im Hauptströmungskanal (11) einschließt.

4. Luftmeßvorrichtung nach einem der Ansprüche 1 bis 3, dadurch gekennzeichnet, daß im Hauptströmungskanal (11) unterhalb der Mündung (43) des Bypasskanals (12) eine Drosselklappe (20) angordnet ist, die zur Drosselung der Luftströmung um eine quer zur Achse des Hauptströmungskanals (11) ausgerichtete Schwenkachse (21) drehbar ist, und daß die Bypassmündung (43) in Richtung der Hauptströmungskanalachse gesehen exakt über der Schwenkachse (21) der Drosselklappe (20) und mit Abstand von dieser liegt und daß der axiale Abstand der Bypassmündung (43) zur Schwenkachse (21) größer ist als das 0,3-fache des Drosselklappendurchmessers.

## Claims

1. Air-flow meter, in particular for measuring the quantity of air taken in by an internal combustion engine, having a main flow channel (11) which has a venturi-shaped flow section (venturi section) (24), having a bypass channel (12) which opens into the main flow channel (11) in the direction of flow above, in the smallest flow cross-section (minimum cross-section) (25) of the venturi section (24) or below it, and having a temperature-dependent measuring resistor (26) which is arranged in the bypass channel (12), there being constructed in the bypass channel (12) a channel area (30) which is bounded by an inlet opening (34) and an outlet opening (35) and has a central section (31) which receives the measuring resistor (26) and an inlet section (32) which adjoins the said central section (31) upstream and ends at the inlet opening (34), and an outlet section (33) which adjoins the central section (31) downstream and ends at the outlet opening (35), and the inlet opening (34) and the outlet opening (35) being congruent with the channel cross-section of the adjoining channel section (121, 122) of the bypass channel (12), characterized in that the channel area (30) is constructed in such a way that the ratio of the flow cross-section of the central section (31) to the minimum cross-section (25) of the venturi section (24) is 1:8 to 1:25 and the ratio of the cross-section of the inlet opening (34) to the outlet opening (35) is in each case 1:>1 to 1:2.

2. Air-flow meter according to Claim 1, characterized in that an inlet section and an outlet section (32, 33) of the channel area (30) are of truncated cone shape, and in that, as the ratio of the flow cross-section of the central section (31) to the cross-section of the inlet opening (34) or outlet opening (35) increases, the cone angle of the inlet section (32) rises to approximately 8° and that of the outlet section (35) rises to approximately 30°.

3. Air-flow meter according to Claim 1 or 2, characterized in that the bypass channel (12) is constructed in the area of its mouth which lies in the minimum cross-section (25) of the venturi section (24) or below it, in such a way that the direction of air flow at the mouth of the bypass encloses an acute angle (α), preferably approximately 30°, with the direction of flow in the main flow channel (11).

4. Air-flow meter according to one of Claims 1 to 3, characterized in that a throttle valve (20) is arranged in the main flow channel (11) below the mouth (43) of the bypass channel (12), which throttle valve (20) can be rotated about a pivot axis (21) aligned transversely with respect to the axis of the main flow channel (11) in order to throttle the air flow, and in that the bypass mouth (43) lies, viewed in the direction of the axis of the main flow channel, exactly over the pivot axis (21) of the throttle valve (20) and at a distance therefrom, and in that the axial distance between the bypass mouth (43) and the pivot axis (21) is greater than 0.3 times the diameter of the throttle valve.

## Revendications

1. Dispositif pour la mesure de l'air, notamment pour mesurer la masse d'air aspirée par un moteur à combustion interne, comportant un segment d'écoulement en forme de Venturi (segment à Venturi 24) formant le canal principal (11), un canal de dérivation (12) qui débouche dans le canal principal (11), en amont, dans la plus petite section de passage (section minimale 25) du segment à Venturi (24) ou en dessous de cette section et d'une résistance de mesure (26) dépendant de la température, placée dans le canal de dérivation (12), le canal de dérivation (12) ayant un segment de canal (30) délimité par une ouverture d'entrée (34) et une ouverture de sortie (35), ce segment de canal comprenant un segment central (31) muni de la résistance de mesure (26) et adjacent en amont à un segment d'entrée (31) se terminant par l'orifice d'entrée (34), et en aval à un segment de sortie (33) adjacent se terminant par l'orifice de sortie (35), l'orifice d'entrée (34) et l'orifice de sortie (35) rejoignant la section de canal du segment de canal adjacent (121, 122) du canal de dérivation (12), dispositif caractérisé en ce que le segment de canal (30) est réalisé pour que la section de passage du segment central (31) présente, par rapport à la section minimale (25) du segment à Venturi (24), un rapport de 1/8 jusqu'à 1/25 et par rapport à la section de l'orifice d'entrée (34) et de l'orifice de sortie (35), un rapport de 1:>1 jusqu'à 1:2.

2. Dispositif pour la mesure de l'air selon la revendication 1, caractérisé en ce que le segment d'entrée et le segment de sortie (32, 33) du segment de canal (30) sont en forme de tronc de cône et l'angle du segment d'entrée (32) va jusqu'à environ 8° et celui du segment de sortie (35) jusqu'à environ 30°, en fonction croissante du rapport de la section de passage du segment central (31) à la section de l'orifice d'entrée (34) ou de l'orifice de sortie (35).

3. Dispositif pour la mesure de l'air selon la revendication 1 ou 2, caractérisé en ce que le canal de dérivation 12 est réalisé au niveau de l'ouverture située dans la zone de la section minimale (25) du segment de Venturi (24) ou en dessous de celle-ci de façon que la direction de l'écoulement de l'air à l'embouchure de la dérivation, fasse un angle aigu α de préférence de l'ordre de 30°, par rapport à la direction de l'écoulement dans le canal principal (11).

4. Dispositif pour la mesure de l'air selon l'une des revendications 1 à 3, caractérisé en ce que, dans le canal d'écoulement principal (11) en dessous de l'embouchure (43) du canal de dérivation (12), un papillon d'étranglement (20) peut tourner sur un axe de basculement (21) transversal à l'axe du canal principal (11) pour étrangler le passage de l'air, et l'embouchure de dérivation (43) vue dans la direction de l'axe du canal principal se trouve exactement au-dessus de l'axe de pivotement (21) du papillon (20) ou à une certaine distance de celui-ci, et l'écartement axial de l'embouchure de dérivation (43) par rapport à l'axe de pivotement (21) est supérieur à 0,3 fois le diamètre du papillon d'étranglement.
